# EUROPÄISCHE PATENTSCHRIFT

(11) **EP 2 895 313 B1**
(45) Veröffentlichungstag und Bekanntmachung des Hinweises auf die Patenterteilung: **12.02.2020**
(21) Anmeldenummer: 13774602.0
(22) Anmeldetag: 13.09.2013
(51) Int. Cl.: B29C 51/16, B65C 9/18, G09F 3/00, G09F 3/04

(54) **VERFAHREN UND VORRICHTUNG ZUM ETIKETTIEREN EINES KONISCHEN KUNSTSTOFFBEHÄLTERS**
METHOD AND DEVICE FOR LABELLING A CONICAL PLASTIC CONTAINER
PROCÉDÉ ET DISPOSITIF D'ÉTIQUETAGE D'UN RÉCIPIENT CONIQUE EN MATIÈRE PLASTIQUE

(30) Priorität: 13.09.2012 DE 102012018094
(43) Veröffentlichungstag der Anmeldung: 22.07.2015
(73) Patentinhaber: Finnah Packtec GmbH, 4868 Ahaus (DE)
(72) Erfinder: LINGENHOFF, Berthold, 48683 Ahaus (DE); MASSING, Martin, 48683 Ahaus (DE); KISTNER, Michael, 48366 Laer (DE); RÖSNER, Olaf, 48619 Heek (DE)
(74) Vertreter: Busse & Busse
(86) Internationale Anmeldenummer: PCT/EP2013/002760
(87) Internationale Veröffentlichungsnummer: WO 2014/040741

(56) Entgegenhaltungen:
- EP-A1- 0 501 105
- FR-A1- 2 034 915
- FR-A1- 2 484 957

## Beschreibung

Die Erfindung betrifft ein Verfahren zum Etikettieren eines konischen Kunststoffbehälters gemäß dem Oberbegriff des Anspruchs 1, eine hierfür vorgesehene Vorrichtung gemäß Anspruch 10.

Seit langem sind Verfahren zum Herstellen von Behältern aus thermoplastischer Folie im Zusammenhang mit entsprechenden Tiefziehmaschinen bekannt (DE 36 36 767 A1, 1988). Dabei erfolgt eine kombinierte Herstellung und Banderolierung der Becher derart, dass in eine Hohlform zuerst die Banderolen eingelegt und diese dann gleichzeitig beim Tiefziehen an die Außenseite der herzustellenden Behälter angesiegelt werden. Die dazu vorgeformten Etiketten werden als jeweilige hülsenförmige Halbzeuge auf einem Drehteller einer Zuführvorrichtung positioniert und in dieser "stehenden Lage" getaktet in die zylindrischen Formwerkzeuge eingebracht. Dieses Verfahren ist aufwändig und erfordert stehende Hülsen-Halbzeuge, so dass diese beim Einbringen in die Formen eine exakte Führung erfordern und das System fehleranfällig ist.

Bei einer Anordnung gemäß EP 0 296 302 B1 (1987) werden die Etiketten in Formvorrichtungen mit Hohlformreihen eingeführt, wobei diese durch Wickeldorne mit den aufgerollten Etiketten beschickt werden. Dazu werden die Etiketten aus einem Streifen gewonnen, der von einer Rolle abgewickelt wird und zuerst in Längsrichtung und dann in Querrichtung jeweilige Schnitte erfordert. Die Streifen werden danach auf einem zylindrischen Wickeldorn übergeben und in die Formvorrichtung als innere Wandauskleidung eingegeben. Auch bei einer Lösung gemäß EP 0 467 002 B1 (1990) werden einzelne Etiketten verarbeitet, wobei diese jedoch aus Papier hergestellt sind und in Form vorgeformter Hülsen in ein jeweiliges Formwerkzeug eingelegt werden. Diese Papier-Etiketten können dabei auch als kegelstumpfförmige Hülsen vorgeformt sein, wobei eine entsprechende Konturierung des aufnehmenden Formwerkzeugs für den Behälter erforderlich ist. Die Hülsen werden vorzugsweise in das Formwerkzeug "eingestellt", so dass danach die endgültige Formung der Becher möglich ist.

In DE 100 11 386 B4 (1990) sind ein Verfahren und eine Anlage zur Herstellung von Behältern durch Warmformen und zum Anbringen von Dekorbändern an den Behältern beschrieben. Zur Gewährleistung eines ordnungsgemäßen Einrollens von Enden jeweiliger als Etikett vorgesehener Dekorstreifen werden diese in Einführkammern platziert, wo ein Wickelkern jeweils so angeordnet ist, dass ein ringförmiger Wickelraum zwischen dem Umfang des Kerns und der Innenwand der Einführkammer definiert wird. Der in diesem Wickelraum vorrückende Dekorstreifen kann nur eine zylindrische Form annehmen. Wenn dann die Enden der Dekorstreifen um eine vollständige Wicklung eingerollt sind, werden die Dekorstreifen auf gleicher Höhe mit den Durchlässen abgeschnitten, derart, dass ihre abgeschnittenen Stücke Bänder bilden, die in den Einführkammern eingerollt sind. Diese Bänder werden dann durch eine vertikale Hubbewegung in die jeweiligen Becherformkammern übernommen.

Bei einem Verfahren und einer Vorrichtung zum Herstellen von mit einer Banderole versehenen zylindrischen Behältern gemäß DE 103 48 182 A1 (2003) werden die Banderolen mittels einer Zuführeinrichtung in die zylindrischen Formnester eines Unterwerkzeugs eingebracht. Die Zuführeinrichtung weist dabei eine Transporteinrichtung auf, die Schrittweise eine endlose Banderolenbahn transportieren kann. Außerdem umfasst die Zuführeinrichtung einen Kern, der von einer zylinderförmigen Wand umgeben ist und somit einen ringförmigen Spalt bilden kann. Die Banderolenbahn wird von der Transporteinrichtung in diesen Spalt transportiert, so dass sich die Banderolenbahn um den zylindrischen Kern wickelt und über dessen Umfang verläuft. In dieser Lage wird die Banderolenbahn mittels einer Abtrennvorrichtung abgeschnitten. Für den Weitertransport dieser nunmehr abgetrennten einzelnen Banderole weist die Zuführeinrichtung jeweilige Einführstifte auf, die in den Spalt zwischen dem Kern und der zylindrischen Wand eingreifen können. Dabei sind vorzugsweise mehrere Einführstifte über den Umfang des ringförmigen Spalts verteilt, so dass mittels dieser Einführstifte die Banderole von dem Spalt in das jeweilige Formnest des Formblocks überführt wird.

Bei diesem Überführungsvorgang ist vorgesehen, dass die Zuführeinrichtung von dem jeweils korrespondierenden Formblock mit den Formnestern weggefahren werden muss. Erst in dieser Lage kann die Zuführeinrichtung an die Seite mit Öffnungen - durch die später der jeweilige Stempel des Oberwerkzeugs in die Formnester eingeführt wird - mittels einer zusätzlichen Steuer- und Stellbewegung angestellt werden. Dieses System ist damit aufwändig und insbesondere nur für die Herstellung zylinderförmiger Etiketten geeignet, da eine Verlagerung mittels Einführstiften erforderlich ist.

In DE 31 19 717 A1 wird eine Banderoliervorrichtung vorgeschlagen, bei der Banderolen auf einen zylindrischen Wickeldorn aufgebracht werden. Eine spezielle Vorrichtung zum Aufkleben von Etiketten, die auf einem Trägerband zugeführt werden, zeigt DE 41 06 387 A. Auch die Vorrichtung gemäß DE 297 13 877 U1 sieht die Übergabe eines Rundumetiketts von einem Trägerband auf einen Becher vor. Gemäß FR 2 484 957 A (entspricht DE 31 19 717 A1) wird nur eine Vorrichtung zum Zuschneiden von Banderolen gezeigt, die Mittel zum Durchführen von Längsschnitten verwendet und dazu einen zylindrischen Wickeldorn verwendet. Die FR 2 484 957 offenbart ein Verfahren zum eines konischen Kunststoffbehälters und hier- für vorgesehene Banderole, die in Form eines Etikettes, Dekorbandes o. dgl. Informationsträgers von einem insbesondere getaktet vorschiebbaren Zuführstreifen auf einen Zuführstempel übergeben und von diesem, aus mittels einer Vorschubbewegung in ein jeweiliges Formnest einer Tiefziehanordnung verlagert wird, derart, dass während einer anschließenden In-Mould-Bearbeitungsphase jeweils das einzelne Etikett und der zu formende Kunststoffbehälter in dem gemeinsamen Formnest zusammengeführt werden, wobei zumindest einem Zuführstreifen jeweilige Teilabschnitte mit einer bereichsweise kreisringsektorförmigen Kontur vorgeformt sowie dieser Zuführstreifen getaktet an einen zylindrischen Zuführstempel übergeben werden, wobei an den eine verbundene Reihe bildenden Teilabschnitten zumindest ein Vereinzelungsschnitt durchgeführt sowie ein dabei abgetrennter Teilabschnitt jeweils als einzelnes kreisringsektorförmiges Etikett in das Formnest überführt wird und der jeweils als ein vorderes Ende des Zuführstreifens mit diesem verbundene Teilabschnitt zu dem zumindest bereichsweise eine zylindrische Umfangskontur aufweisenden Zuführstempel hin in eine Übernahmeposition verlagert wird und wobei das vordere Ende des Zuführstreifens oder das einzelne kreisringsektorförmig geschnittene Etikett an dem zylindrischen Umfangsteil des Zuführstempels tangential angelegt.

Die Erfindung befasst sich mit dem Problem, ein Verfahren zum Etikettieren eines konischen Kunststoffbehälters sowie eine dafür vorgesehene Vorrichtung zu schaffen, die auch bei vergleichsweise hohen Taktfrequenzen in einer Form-, Füll- und Verschließmaschine einsetzbar sind, dabei eine optimale Anbringung von Etiketten an konischen Behältern möglich ist und das System eine steuerungstechnisch einfache Handhabung aufweist.

Die Erfindung löst dieses Problem mit einem Verfahren mit den Merkmalen des Anspruch 1 sowie einer Vorrichtung zum Etikettieren mit den Merkmalen des Anspruchs 10. Weitere Ausgestaltungen ergeben sich aus den Ansprüchen 2 bis 9 und 11 bis 24.

Für eine Anwendung der komplexen In-Mould-Verarbeitung von Becherfolien mit an diesen vorgesehenen Informationsträgern im System insbesondere einer Form-, Füll- und Verschließmaschine wird erfindungsgemäß ein Etikettierverfahren mit einer funktional verbesserten Baueinheit im Bereich der Etiketten-Zuführung vorgeschlagen.

Ausgehend davon, dass an den bisher zur Etiketten-Bildung genutzten Zuführstreifen nunmehr bereits jeweilige Teilabschnitte mit einer bereichsweise kreisringsektorförmigen Kontur geformt werden, kann dieser vorgeformten Kontur folgend der eigentliche Übertragungsvorgang zu einem jeweiligen konischen Formnest hin optimiert werden. Dabei wird die Verfahrensführung so gesteuert, dass mittels eines konischen Zuführstempels ein auf diesen überführtes und vorpositioniertes Kreisringsektor-Etikett lagegenau erfasst werden kann. Dieses Etikett ist in einer "konischen Aufrollung" so auf dem Zuführstempel gehalten, dass auch bei hohen Transportgeschwindigkeiten oder die Lage des Etiketts beeinflussenden Beschleunigungen eine vorgesehene Einbaulage in dem jeweiligen Formnest zielsicher und präzise erreicht wird. Die Verlagerung der Zuführstempel kann dabei - in vertikaler oder horizontaler Richtung - durch eine vergleichsweise einfach zu steuernde Hubbewegung erfolgen. Ausgehend vom Stand der Technik - bei dem einzelne zylindrische Etiketten verwendet oder nur zylindrische Hülsenteile von einer Streifenkontur abgenommen werden - wird nunmehr erfindungsgemäß ein "endloser" Streifen eingesetzt, bei dem in einem vorgelagerten Bearbeitungsschnitt eine verbundene Reihe bildende Teilabschnitte formbar sind. Diese Teilabschnitte ist dabei vorzugsweise mittels eines einzigen Vereinzelungsschnitts abgetrennt werden. Ebenso ist denkbar, die gesamte kreisringsektorförmige Kontur unmittelbar im Nahbereich der Zuführbaugruppe an einem Band o. dgl. herauszuschneiden. Diese abgetrennten Teilabschnitte ist dann jeweils als einzelnes kreisringsektorförmiges Etikett in das Formnest überführt werden, derart, dass dessen konische Innenwandung mit dem sich selbsttätig konisch ausrichtenden Etikett ausgekleidet wird. Danach wird mittels der In-Mould-Bearbeitung die in das konische Formnest eingepresste Becher-Folie mit dem "konischen" Etikett zu einer Einheit verbunden.

Die Verfahrensführung im Bereich der jeweiligen Banderolenzuführung(en) sieht vor, dass der jeweils ein vorderes Ende des Zuführstreifens definierende Teilabschnitt zu dem zumindest bereichsweise eine konische Umfangskontur aufweisenden Zuführstempel hin in eine Übernahmeposition verlagert wird. Dabei können dann jeweilige Übernahmeelemente die vollständige "Umwickelung" der konischen Umfangskontur bewirken. Denkbar ist ebenfalls, dass diese Banderolenzuführung jeweilige Schubelemente aufweist. Der in einen an sich bekannten Übernahmespalt eingeschobene Teilabschnitt wird so weit vorgeschoben, dass dieses "Etikett" vor dem Trennschnitt bereits nahezu vollständig auf die konische Umfangskontur des Zuführstempels verlagert ist.

Ausgehend von der die jeweiligen vorgeformten Teilabschnitte aufweisenden "Halbzeug-Banderole" ist vorgesehen, dass das vordere Ende dieses Zuführstreifens - bzw. das bereits vereinzelte kreisringsektorförmig abgetrennte Etikett - an dem konischen Umfangsteil des Zuführstempels tangential angelegt wird. Dieser bereits anliegende Teilbereich weist erfindungsgemäß eine zur vertikalen Achse des konischen Zuführstempels geneigte Vorschubrichtung auf. In dieser "geneigten Lage" kann nunmehr der vorgesehene Etiketten-Streifen entlang des konischen Umfangsteils optimal verlagert werden. Dazu ist gleichzeitig eine sich an der kreisringsektorförmigen Kontur orientierende Anlageführung wirksam, so dass eine Umschlingung des konischen Zuführstempels präzise und faltenfrei ohne weitere Hilfselemente erreicht wird. Für diese Führung am konischen Zuführstempel ist insbesondere eine in das System integrierte Führungsbahn im Bereich des Aufnahmespaltes vorgesehen. Diese kann zumindest eine der bogenförmigen Teilkonturen des kreisringsektorförmigen Teilabschnitts erfassen.

Das eingeschobene vereinzelte Etikett kann in dieser den Zuführstempel zumindest bereichsweise umgreifenden Transportstellung fixiert werden. Danach ist der Zuführstempel mit dem Etikett durch eine einzige geradlinige Stellbewegung - mittels der Maschinensteuerung - in das Formnest für den Kunststoffbehälter überführbar.

Die Verfahrensführung im Bereich des vorgeformten Banderolen-Teilabschnitts bzw. des abgetrennten kreisringsektorförmigen Etiketts sieht vor, dass dieses jeweils in einen Zeitbereich vor, während oder nach Anlegen des Etiketts am Zuführstempel endgültig formbar ist. Im einfachsten Fall wird das Etikett am rückseitigen Ende mittels zumindest des einen Vereinzelungsschnitts vom Zuführstreifen getrennt. Damit ergeben sich unterschiedliche Möglichkeiten einer lagegenauen Fixierung des "konischen" Etiketts am konischen Zuführstempel.

Für einen kontinuierlichen Ablauf des Beschickungsverfahrens ist vorgesehen, dass mehrere der Zuführstreifen in Längsrichtung jeweils mehrere der bereits vorgeformten Teilabschnitte in einer verbundenen Reihenanordnung aufweisen und diese getaktet nacheinander als jeweilige vereinzelte Etiketten von einem jeweiligen Zuführstempel übernommen werden. Ebenso ist denkbar, dass an einem entsprechend breit bemessenen Zuführstreifen in einer dieser Streifenbreite entsprechenden Über- bzw. Nebeneinanderanordnung mehrere Reihenanordnungen mit jeweiligen Teilabschnitten vorgeformt werden und dieser "mehrreihige" Zuführstreifen dann einen zusätzlichen Längstrennschnitt erfordert.

Vorteilhaft ist vorgesehen, dass der vorgeformte Teilabschnitt zur Bildung des einzelnen Etiketts nur noch im Bereich einer im Wesentlichen quer zur Streifenlängsrichtung verlaufenden Konturlinie getrennt und danach vom Zuführstreifen abgezogen wird. Entsprechend der Reihenanordnung ist vorteilhaft vorgesehen, dass während des zumindest einen Vereinzelungsschnitts am hinteren Ende des jeweils in Übergaberichtung vorderen Teilabschnitts gleichzeitig eine vordere Kontur des nachfolgenden Teilabschnitts geformt wird. Entsprechend der kreissektorförmigen Gestalt der Teilabschnitte werden während des Vereinzelungsschnittes mehrere Schnittlinien erzeugt. Dabei entsteht zusätzlich zu den jeweils einen Nutzen bildenden Etiketten ein in Form einer Ausklinkung verbleibendes und zu entsorgendes Abfallstück.

Die Vorrichtung zum Etikettieren eines konischen Kunststoffbehälters gemäß dem vorbeschriebenen Verfahren ist insbesondere für die Anwendung im Bereich einer Form-, Füll- und Verschließmaschine vorgesehen. Dabei wird eine so genannte In-Mould-Bearbeitungsphase realisiert, bei der jeweils zumindest eines der Etiketten und das zu formende Behältnis in einem gemeinsamen Formnest zusammengeführt werden. Erfindungsgemäß zeichnet sich diese Vorrichtung dadurch aus, dass ein an zumindest einem Zuführstreifen vorgesehenes und mit kreisringsektorförmiger Kontur formbares Etikett einem Zuführstempel zugeführt wird, der zumindest bereichsweise eine konische Umfangskontur aufweist. Für diese "Übertragungsverbindung" wird eine Optimierung im Bereich eines Übergabespaltes dadurch erreicht, dass für das bereits vereinzelte Etikett eine in Förderrichtung eine zumindest bereichsweise lagegenaue Umschlingung des konischen Zuführstempels steuernde Führungsanlage vorgesehen wird. Mit dieser Zuführkonstruktion wirkt eine vorgeordnete Schneidvorrichtung mit zumindest einem Schneidelement zusammen, so dass der Zuführstreifen mit vorgeformten Teilabschnitten optimal in der jeweiligen Taktphase bereitgestellt werden kann.

Die Übergabe des vorgeformten Teilabschnitts sieht vor, dass im Bereich des Zuführstempels ein jeweils vereinzeltes Etikett entlang einer Führungsanlage bis in eine vorgebbare Übergabeposition am konischen Zuführstempel verlagert wird. Danach erfolgt eine Festlegung derart, dass das zumindest am konischen Bereich des Zuführstempels gehaltene Etikett gemeinsam mit dem Formstempel in das Formnest überführt werden kann.

Die Vorrichtung zeichnet sich dadurch aus, dass der bereichsweise konisch geformte Zuführstempel in eine im Wesentlichen komplementäre Aufnahmeöffnung einer Führungsplatte so eingreift, dass der Zuführstempel schubbeweglich verlagert werden kann. In diese Aufnahmeöffnung wird der kreisringsektorförmige Teilabschnitt bzw. das abgetrennte Etikett eingebracht. In dieser Lage sind die Führungsplatte sowie der Zuführstempel in Gegenüberlage zu einem Formnest der Becherformung positioniert, so dass auf kurzem Wege eine Übergabe des konischen Etikettes möglich ist.

Die Führungsplatte ist für diesen Übergabevorgang vorteilhaft zweiteilige ausgebildet. Die in der Beschickungslage den Zuführstempel zumindest bereichsweise umgreifende Aufnahmeöffnung kann durch diese zweiteilige Ausführung erweitert werden. Dazu erfolgt die Verlagerung eines Schlittenteils, so dass die Aufnahmeöffnung "geöffnet" wird und der Zuführstempel in eine vorgesehene Richtung gemeinsam mit dem Etikett in ein Formnest verlagert werden kann. Für diese Vorgabe von Öffnungs- bzw. Schließstellungen ist denkbar, dass die Führungsplatte im Bereich des Schlittens auch mehrteilig ausgebildet wird.

Die Konstruktion kann so erweitert sein, dass die Aufnahmeöffnung auf variable Querschnittsvergrößerungen einstellbar ist, so dass der das Etikett tragende Zuführstempel auf seinem Zuführweg bis zu dem zugeordneten Formnest hin eine freie Ausfahrtrichtung überbrückt.

Die Konstruktion im Bereich des verlagerbaren Schlittenteils ist dadurch optimiert, dass in diesen ein in die Aufnahmeöffnung tangential einmündender Zuführschlitz integriert wird. Bei einer einstückigen Ausführung des Schlittenteils ist der Zuführschlitz geradlinig ausgeführt, so dass im Bereich des Schlitzbodens eine Führung für das daran verschobene Streifenteil wirksam wird. Ebenso ist denkbar, dass der Zuführschlitz als "Trennlinie" eines zumindest zweiteiligen Schlittenteils ausgebildet sein kann. Insbesondere mit dieser mehrteiligen Ausführung des Schlittenteils sind weitere konstruktive Anpassungen möglich, wobei der Zuführschlitz insbesondere in seinen Längen-, Breiten- und/oder Höhenabmessungen verändert bzw. eingestellt werden kann.

Im Nahbereich der Aufnahmeöffnung im Schlittenteil ist eine das vordere Ende des vorgeformten Teilabschnitts erfassende Einzugsbaugruppe vorgesehen. In kompakter Ausführung ist vorgesehen, dass im Bereich des in die Aufnahmeöffnung einmündenden Zuführschlitzes die zumindest ein Einzugrad aufweisender Einzugsbaugruppe vorgesehen ist. Zur Optimierung des Einzugsvorganges ist vorgesehen, dass das Einzugsrad im Bereich des konischen Zuführstempels mit einem Einzug-Gegenrad zusammenwirkt.

Im Bereich der vorbeschriebenen Vorrichtung bzw. der aus Zuführstempel und Führungsplatte gebildeten Einheit ist eine die Reihenanordnung der vorgeformten Teilabschnitte erfassende Vorzugsbaugruppe vorgesehen, wobei in deren Nahbereich wiederum eine Schneidbaugruppe angeordnet wird. Die Vorzugsbaugruppe ist dabei insbesondere mit einer Antriebsrolle und einer Gegenrolle versehen, so dass von dieser aus die jeweilige Zuführbanderole erfassbar und gesteuert weitergebbar ist.

Im Bereich der Schneidbaugruppe sind zwei gegenüberliegende Schneidplatten vorgesehen, so dass die zwischenliegende Zuführbanderole positionsgenau getrennt werden kann. Zur Herstellung der kreissektorförmigen Kontur am Nutzen ist ein eine Dreieckskontur bildendes Schneidmesser vorgesehen, mit dem gleichzeitig ein Abfallstück erzeugt wird.

Die für das vorbeschriebene Verfahren und die Vorrichtung eingesetzte Banderole zeichnet sich dadurch aus, dass diese als ein vorgeformter Streifen, eine Rolle o. dgl. bereitgestellte Banderole mit kreisringsektorförmig vorgeformten Teilabschnitten versehen ist.

Weitere Einzelheiten und vorteilhafte Ausgestaltungen der Erfindung ergeben sich aus der nachfolgenden Beschreibung und den Zeichnungen, die ein Ausführungsbeispiel für das erfindungsgemäße Verfahren und dessen Anwendung in einer Vorrichtung zum Etikettieren zeigt. In der Zeichnung zeigen:
- Fig. 1: eine Prinzipdarstellung einer Form-, Füll- und Verschließmaschine mit einer revolverkopfartigen Formeinheit und einer Etiketten zuführenden Zuführbaugruppe,
- Fig. 2: eine vergrößerte Schnittdarstellung im Bereich einer einen Zuführstreifen im Bereich der Zuführbaugruppe in einen Übernahmeschlitz einfördernden Vorschubeinheit,
- Fig. 3: eine Schnittdarstellung eines konischen Stempels im Bereich der Aufnahme des Zuführstreifens,
- Fig. 4: eine perspektivische Einzeldarstellung der Zuführbaugruppe im Bereich II gemäß Fig. 1,
- Fig. 5: eine teilweise geschnittene Seitenansicht der Zuführbaugruppe gemäß einer Linie V - V in Fig. 4,
- Fig. 6: eine Draufsicht der Zuführbaugruppe gemäß Fig. 5,
- Fig. 7: eine vergrößerte Darstellung der Vorrichtung in einem Ausschnittsbereich VII in Fig. 6,
- Fig. 8: eine Schnittdarstellung gemäß einer Linie VIII - VIII in Fig. 7,
- Fig. 9 und Fig. 10: jeweilige Perspektivdarstellungen ähnlich Fig. 4 mit unterschiedlichen Lagen des Zuführstreifens,
- Fig. 11: eine Seitenansicht ähnlich Fig. 5 mit einem verlagerten Zuführstempel,
- Fig. 12 und Fig. 13: eine Draufsicht und eine Perspektivdarstellung der Bewegungssituation gemäß Fig. 11,
- Fig. 14: eine Seitenansicht eines Zuführstreifens mit mehreren übereinander angeordneten Teilabschnitten kreisringsektorförmiger Kontur,
- Fig. 15: eine Prinzipdarstellung ähnlich Fig. 11 mit einem die Etiketten vom Zuführstempel übernehmenden Revolverkopf,
- Fig. 16: eine Draufsicht des Systems gemäß Fig. 15,
- Fig. 17: eine Prinzipdarstellung ähnlich Fig. 15 mit einer Einschubphase in die Führungsplatte ohne einliegendem Führungsstempel, und
- Fig. 18: eine Draufsicht des Systems gemäß Fig. 17.

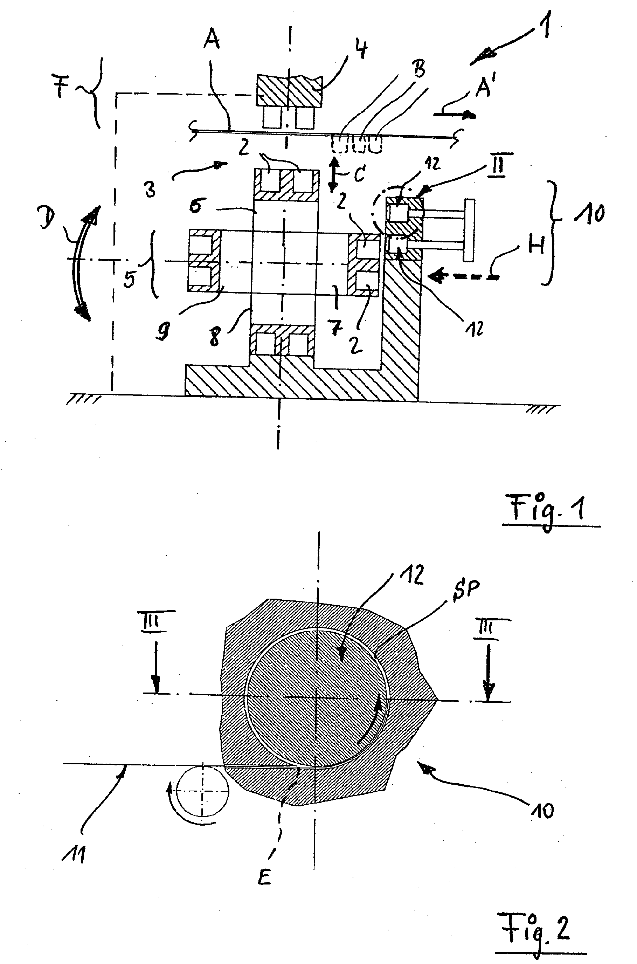

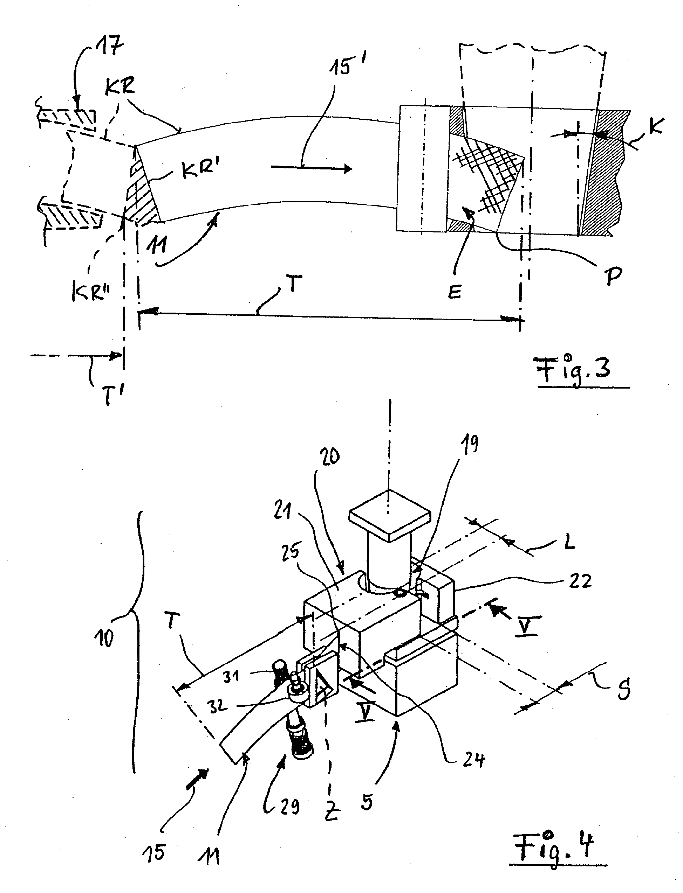

In Fig. 1 ist eine insgesamt mit 1 bezeichnete Vorrichtung zum Etikettieren und Tiefziehen eines tiefgezogenen Kunststoffbehälters B dargestellt, wobei derartige Vorrichtungen 1 insbesondere in einer allgemein mit F bezeichneten Form-, Füll- und Verschließmaschine eingesetzt werden können. Bekannt ist dabei, dass vor dem Tiefziehen der aus einer Folienbahn A durch eine "In-Mould-Vorgang" entstehenden Behälter B jeweilige für diese vorgesehene Etiketten E (Fig. 3) in Formnester 2 eine ein Oberwerkzeug 4 aufweisenden Formpresse 3 eingelegt werden. Dazu ist insbesondere ein parallel unterhalb und quer zur Förderrichtung A' der Folienbahn A angeordnetes revolverkopfartiges Unterwerkzeug 5 mit die Formnester 2 aufweisenden Gegenformblöcke 6, 7, 8, 9 vorgesehen. Dieses Unterwerkzeug 5 wirkt im Bereich einer durch dessen Verschiebung C und Schwenkung D erreichbaren Übergabeposition (hier nicht dargestellt) mit einer das Etikett E übergebenden Zuführbaugruppe 10 zusammen.

Bei dem erfindungsgemäßen Verfahren zum Etikettieren eines Kunststoffbehälters wird die dafür vorgesehene Banderole in Form eines Etiketts, eines Dekorbandes o. dgl. Informationsträgers E von einem insbesondere getaktet vorschiebbaren Zuführstreifen 11 auf einen Zuführstempel 12 übergeben. Von diesem aus wird das Etikett E mittels einer Vorschubbewegung H, H' in ein jeweiliges Formnest 2 einer Tiefziehanordnungen 3 verlagert. Während einer anschließenden In-Mould-Bearbeitungsphase werden dann die einzelnen Etiketten und das zu formende Kunststoffbehältnis B in einem gemeinsamen Formnest zusammengeführt.

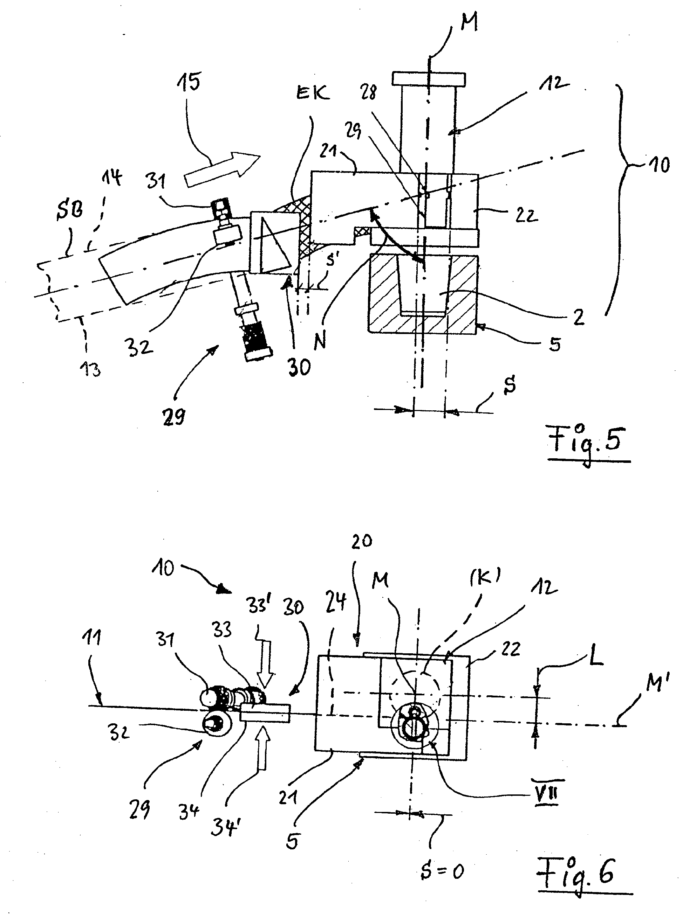

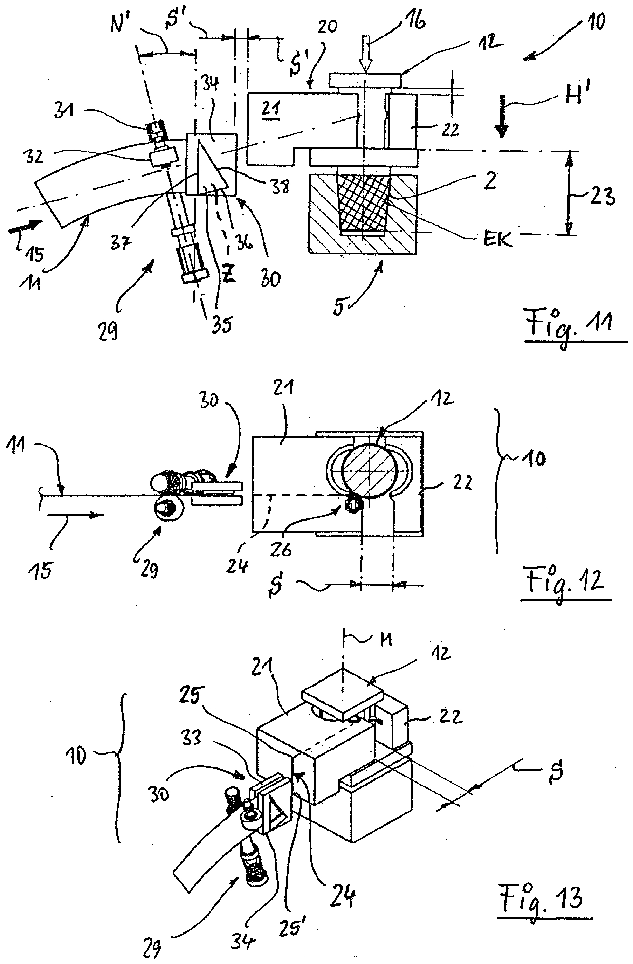

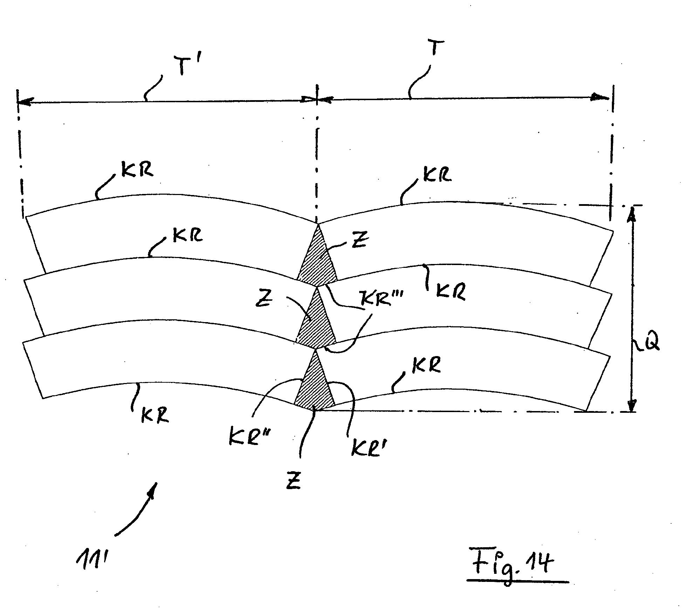

Aus einer Zusammenschau von Fig. 2 und Fig. 3 wird das erfindungsgemäße Konzept beim Etikettieren des konischen Kunststoffbehälters B deutlich, wobei dieses insbesondere aus der Seitenansicht gemäß Fig. 3 ersichtlich ist. Das System geht davon aus, dass an zumindest einem Zuführstreifen 11 jeweilige Teilabschnitte T, T' (Fig. 14) mit einer bereichsweise kreisringsektorförmigen Kontur KR vorgeformt werden (diese Bearbeitung ist nicht näher dargestellt). Die - als verarbeitungstechnische Halbzeuge bereitgestellten - Zuführstreifen 11, 11' können ausgehend von Bändern oder Rollen getaktet an einen konischen Zuführstempel 12 (Fig. 3, Neigung K) übergeben werden. Damit wird in der dargestellten Einschubsituation eine optimale Anlageverbindung erreicht, und das jeweilige Etikett kann optimal von dem Zuführstempel 12 übernommen werden. Aus einer Gesamtschau der Darstellungen - insbesondere in der Abfolge gemäß den Fig. 5 bis Fig. 10 - wird deutlich, dass an den eine verbundene Reihe bildenden Teilabschnitten T, T' zumindest ein Vereinzelungsschnitt durchzuführen ist. Danach kann der eine nunmehr abgetrennte Teilabschnitt T jeweils als das einzelne kreisringsektorförmige Etikett EK (kreuzschraffierte Darstellung, Fig. 11) in das Formnest 2 eines Unterwerkzeugs 5 überführt werden. In Fig. 2 und Fig. 4 ist eine einleitende Phase dieses erfindungsgemäßen Verfahrensablaufs näher dargestellt. Dabei wird deutlich, dass der jeweils als ein vorderes Ende des Zuführstreifens 11 mit diesem verbundene Teilabschnitt T zu dem zumindest bereichsweise eine konische Umfangskontur K aufweisenden Zuführstempel 12 hin in eine Übernahmeposition (Fig. 3) verlagert wird.

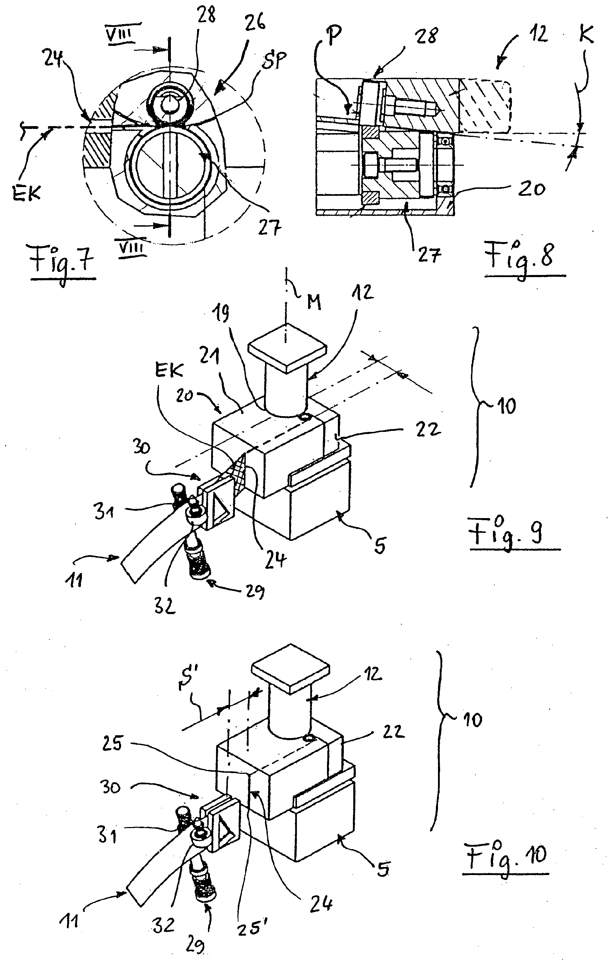

Bei einer Optimierung dieses Übergabevorganges hat es sich als vorteilhaft herausgestellt - insbesondere um die Genauigkeit des Vorgangs zu verbessern -, dass das vordere Ende des Zuführstreifens 11 (oder das einzelne kreisringsektorförmig abgetrennte Etikett) an dem konischen Umfangsteil K des Zuführstempels 12 tangential versetzt zur Hochachse M anzulegen ist (Abstand L, Fig. 6). Dabei wird gleichzeitig eine in der Anlageebene M' (Fig. 6) geneigte Vorschubrichtung (Neigung N, Fig. 5) vorgegeben. Diese geneigte Übernahme- bzw. Übergabephase zeichnet sich insbesondere dadurch aus, dass das Etikett E danach entlang des konischen Umfangsteils K im Spalt SP (Fig. 7) optimal geführt werden kann.

In Fig. 5, linke Seite, ist - mit einer Strichlinie - ein streifenförmiges Band SB mit paralleler Unter- und Oberseite angedeutet, das bei bisherigen, den Stand der Technik bildenden Etikettier-Vorgängen von einer Rolle abgezogen und vor der Zuführbaugruppe 10 abgetrennt wird. Mit den parallelen Längsseiten 13 und 14 ist dieses Band SB prinzipiell einfacher handhabbar. Jedoch kann dieses Band SB nicht für konische Becher - und Formstempel 12 sowie Formnester 2 - verwendet werden. Der Einzug von Etiketten ist dann problematisch, wenn die Elastizität des Bandes SB die jeweiligen Unterschiede zwischen beabsichtigter Zylinderform und Konizität K nicht ausgleichen kann.

Für das erfindungsgemäße kreisringsektorförmige Etikett E, EK ist die Verfahrensführung noch dadurch optimiert, dass während der Zuführ- und Anlegephase am Zuführstempel 12 eine Verlagerung des Etiketts EK entlang einer Führungsbahn P (Fig. 3, Fig. 8) erfolgt und damit eine optimale konische "Umwickelung" erreicht wird.

Nach diesem Einschubvorgang wird das vereinzelte Etikett EK in einer den Zuführstempel 12 zumindest bereichsweise umgreifenden Transportstellung fixiert, derart, dass danach der Zuführstempel 12 gemeinsam mit dem Etikett EK in das Formnest 2 für den Kunststoffbehälter B überführt werden kann (H', Fig. 11). Dabei ist vorgesehen, dass das Etikett EK im konischen Bereich K des Zuführstempels 12 insbesondere durch eine Saugstrom-Vakuum-Einheit (nicht dargestellt) gehalten ist und durch deren Abschaltung an das Formnest 2 übergeben werden kann.

Das erfindungsgemäße Konzept dieser Verfahrensführung sieht vor, dass das kreisringsektorförmige Etikett EK in zeitlicher Abfolge des Maschinentaktes jeweils zeitlich vor, während oder nach dessen Anlegephase am Zuführstempel 12 vom Zuführstreifen 11 getrennt werden kann. Dabei ist - entsprechend der Vorbearbeitung der Teilabschnitte T, T" - zumindest ein Vereinzelungsschnitt am Zuführstreifen 11 so vorgesehen, dass an einer denkbaren perforierten Linie eine vorzeitige Trennung bzw. ein "Abreißen" von Teilabschnitten T, T' während der Förderphase im Spaltbereich SP sicher vermieden ist.

Für einen optimalen Verfahrensablauf ist vorgesehen, dass mehrere der Zuführstreifen 11 in Längsrichtung (Fig. 5) jeweils mehrere der bereits vorgeformten Teilabschnitte T, T' in einer verbundenen Reihenanordnung aufweisen, derart, dass diese Teilabschnitte getaktet nacheinander als jeweilige vereinzelte Etiketten EK von einem jeweiligen Zuführstempel 12 übernommen werden können. Aus der Darstellung gemäß Fig. 14 wird deutlich, dass an dem hier eine Quererstreckung Q aufweisenden Zuführstreifen 11' entsprechend dieser Breite mehrere Reihenanordnungen mit jeweiligen Teilabschnitten T, T' in einer Übereinanderanordnung vorgeformt wurden. Dieses "breite" Brand Q erfordert durch eine zusätzliche Trennung im Bereich der Kontur KR einen entsprechend größeren Aufwand. Die vereinzelten Bänder können dann an mehrere parallele Formstempel 12 bzw. Formnester 2 übergeben werden (nicht dargestellt).

Aus den Prinzipdarstellungen gemäß Fig. 3 und Fig. 14 wird deutlich, dass der vorgeformte Teilabschnitt T zur Bildung des einzelnen Etiketts E bzw. EK nur noch im Bereich einer im wesentlichen quer zur Streifenlängsrichtung verlaufenden Konturlinie KR' getrennt und danach vom Zuführstreifen 11 abgezogen werden kann. Mit einer schraffierten "Zwickel-Darstellung" Z in Fig. 3 und Fig. 14 ist angedeutet, dass während des Vereinzelungsschnittes KR' am hinteren Ende des jeweils in Übergaberichtung vorderen Teilabschnitts T gleichzeitig eine vordere Kontur KR" des nachfolgenden Teilabschnitts T' geformt wird. Während dieses Vereinzelungsschnittes wird deutlich, dass hier gleichzeitig mehrere Schnittlinien KR', KR", KR"' erzeugt werden und dabei das Zwickelstück Z als Abfall entsteht.

Aus den Darstellungen gemäß Fig. 4 bis Fig. 13 wird der Verfahrensablauf anhand einer hier näher beschriebenen Vorrichtung deutlich. Als Basiselement dieser Zuführbaugruppe 10 ist der Zuführstempel 12 mit seiner zumindest Bereichsweise konischen Umfangskontur K wirksam, wobei an dieser - ausgehend von einem Teilabschnitt T mit kreisringsektorförmiger Kontur - ein "konisches" Etikett EK lagestabil geformt wird und dieses dann in das Formnest 2 übergeben werden kann (Fig. 11).

Dabei wird deutliche, dass der mittels zumindest eines Schneidelementes 17 (Fig. 3, linke Seite) am Zuführstreifen 11 vorgeformte Teilabschnitt T, T' (oder ein vorderes Ende des bereits vereinzelten kreisringsektorförmigen Etiketts EK) zumindest phasenweise mit einer Führungsanlage P zusammenwirkt (Fig. 8), die in Förderrichtung 15 eine zumindest bereichsweise lagegenaue Umschlingung des konischen Zuführstempels 12 steuert.

Das Konzept der Vorrichtung 10 ist so aufgebaut, dass diese mit einem den Vereinzelungsschnitt ausführenden Schneidelement 30 versehen wird. Der an den konischen Zuführstempel 12 in eine Anlagestellung verlagerte kreisringsektorförmig vorgeformte Teilabschnitt T, T' wirkt dabei phasenweise mit dem Schneidelement 30 zusammen. Nach einem jeweiligen Trennvorgang (Fig. 9, Fig. 10) ist vorgesehen, dass im Bereich des Zuführstempels 12 das vereinzelte Etikett EK entlang der Führungsanlage P bis in eine vorgebbare Übergabeposition am konischen Zuführstempel 12 verlagert wird. Hier erfolgt dann eine entsprechende Festlegung, und danach können diese beiden Teile gemeinsam in das Formnest 2 abgesenkt werden (Pfeil 16, Fig. 11).

Die Länge der Teilabschnitte T, T' kann in Abstimmung zum jeweiligen Umfang des konischen Stempels 12 (bzw. des daraus resultierenden Bechers) so bemessen werden, dass eine vollständige "Umschlingung" erreicht ist oder nur Teilbereiche etikettiert werden (nicht dargestellt).

Aus der Perspektivdarstellung in Fig. 4 wird deutlich, dass der bereichsweise konisch geformte Zuführstempel 12 in eine im Wesentlichen komplementäre Aufnahmeöffnung 19 (entsprechend dem "Ringspalt" SP, Fig. 2) einer Führungsplatte 20 eingreift. Der kreisringsektorförmige Teilabschnitt T bzw. das Etikett EK kann entsprechend der Vorschubrichtung 15 zum Bereich dieser Aufnahmeöffnung 19 hin vorgeschoben werden. Dieser Verlagerungsvorgang wird zumindest soweit gesteuert, dass das Etikett EK vollständig aus der Führungsplatte 20 entnommen ist (Fig. 10). Damit ist die "konische Anlagestellung" am Zuführstempel 12 erreicht, und dieser kann in Gegenüberlage zu einem Formnest 2 zur Becherformung positioniert werden. In dieser Gegenüberlage (Fig. 11) erfolgt dann die bereits beschriebene Absenkbewegung 16, wobei der schubbewegliche Zuführstempel 12 nun die Aufnahmeöffnung 19 durchgreift.

Aus den Darstellungen wird deutlich, dass die Führungsplatte 20 in vorteilhafter Ausführung zweiteilig ausgebildet ist. Damit wird erreicht, dass die in Beschickungslage den Zuführstempel 12 zumindest bereichsweise umgreifende Aufnahmeöffnung 19 (Darstellung gemäß Fig. 9 und Fig. 10) durch Verlagerung des beweglichen Schlittenteils 21 in eine Abstandslage S (Fig. 5) zu einem Festteil 22 erweiterbar ist und danach der Zuführstempel 12 in dieser erweiterten Stellung (Fig. 11 bis Fig. 13) aus dieser Führungsplatte 20 herausgefahren werden kann. Dabei wird gleichzeitig der vordere Rand der Führungsplatte 20 bis auf einen vorteilhaft geringen Übernahmeabstand S' zu den vorgelagerten Baugruppen 29 und 30 hin positioniert (Fig. 11).

Es versteht sich, dass die Aufnahmeöffnung 19 auf unterschiedliche Querschnittsvergrößerungen einstellbar sein kann. In jedem Falle erfolgt die Stellbewegung beim Öffnen gemäß Abstand S (Fig. 4) so weit, dass der das Etikett EK tragende Zuführstempel 12 auf einem Zuführweg 23 (Fig. 11) bis in ein zugeordnetes Formnest 2 des Unterwerkzeuges 5 verlagert werden kann.

Aus den Darstellungen der Vorrichtung 10 wird auch deutlich, dass das verlagerbare Schlittenteil 21 einen in die Aufnahmeöffnung 19 tangential (mit Abstand L zur Hochachse M) einmündenden Zuführschlitz 24 aufweist (Fig. 13). Bei der darin für das Streifenteil 11 erfolgenden Vorschubbewegung in Pfeilrichtung 15 wird erfindungsgemäß erreicht, dass der Zuführschlitz 24 im Bereich seines Schlitzbodens 25 und/oder seines Schlitzrandes 25' als Führung (Fig. 13) für das jeweilige Streifenteil 11 bzw. das Etikett EK wirken kann.

Ebenso ist denkbar, dass der Zuführschlitz 24 im Verbindungsbereich von zwei das Schlittenteil 21 bildenden Verbindungsteilen (nicht dargestellt) vorgesehen ist. Diese denkbare mehrteilige Ausführung des Schlittenteils 21 ermöglicht im Bereich des Zuführschlitzes 24 optimale Anpassungen an den Zuführstreifen 11. Dabei kann der Zuführschlitz 24 im Bereich seiner jeweiligen Längen-, Breiten- und/oder Höhenabmessungen mit geringem Aufwand veränderbar bzw. einstellbar ausgeführt werden, so dass damit für unterschiedliche Materialen und/oder Materialdicken eine optimale Führung eingestellt wird.

Einen weiteren Bestandteil der Zuführbaugruppe 10 bildet eine den Zuführstreifen 11 erfassende Einzugsbaugruppe 26, die im Bereich des Zuführschlitzes 24 nahe der Aufnahmeöffnung 19 eine das vordere Ende des vorgeformten Teilabschnitts T erfassenden Bereich einnimmt.

Aus den vergrößerten Darstellungen gemäß Fig. 7 und Fig. 8 wird deutlich, dass im Bereich des in die Aufnahmeöffnung 19 einmündenden Zuführschlitzes 24 die zumindest ein Einzugrad 27 aufweisende Einzugsbaugruppe 26 vorgesehen ist. In vorteilhafter Ausführung ist in diesem Bereich vorgesehen, das das Einzugrad 27 im Bereich des konischen Zuführstempels 12 mit einem Einzug-Gegenrad 28 zusammenwirken kann, derart, dass eine optimale Führung des Etikettes EK im Wickel-Spalt SP erreicht wird.

Der aus Zuführstempel 12 und Führungsplatte 20 gebildeten Einheit ist in zweckmäßiger Ausführung eine die Reihenanordnung der vorgeformten Teilabschnitte T, T' erfassende Anstellbaugruppe 29 zugeordnet (Fig. 11). In deren Bereich ist eine zusätzliche Schneidbaugruppe 30 für den Trennschnitt vorgesehen.

Aus den Perspektivdarstellungen gemäß Fig. 4 und den Einzeldarstellungen gemäß Fig. 11 bis Fig. 13 wird deutlich, dass die Anstellbaugruppe 29 mit einer Antriebsrolle 31 und einer Gegenrolle 32 versehen ist und von diesen die Zuführbanderole 11 optimal erfasst und in die Vorschubrichtung 15 gesteuert werden kann. Für deren optimale Führung der kreisringsektorförmigen Etiketten EK ist vorgesehen, dass die Anstellbaugruppe 29 eine der Neigung N entsprechende Schrägstellung N' (Fig. 11) aufweist.

Aus den Darstellungen wird auch deutlich, dass die Schneidbaugruppe 30 zwei parallele Schneidplatten 33, 34 aufweist, auf denen eine Dreieckskontur (Fig. 13) bildende Schneidmesser 36, 37, 38 bzw. eine Schneidöffnung 35 vorgesehen sind (Fig. 11). Mit dieser Schneidkonstruktion (Fig. 11) wird die in Fig. 3 und Fig. 14 dargestellte Schnittkontur im Bereich des Zwickels Z an den Teilabschnitten T, T' erreicht. In Fig. 6 ist mit jeweiligen Pfeilrichtungen 33' und 34' der Schneidvorgang angedeutet.

Aus den beiden Ausführungsformen des erfindungsgemäßen Zuführstreifens 11, 11' (Fig. 3, Fig. 14) wird auch deutlich, dass dieser insbesondere für eine Form-, Füll- und Verschließmaschine vorgesehene Zuführstreifen 11, 11' als jeweilige Band- oder Rollenlage mit kreisringsektorförmig vorgeformten Teilabschnitten KR, KR', KR" bereitgestellt werden kann. Danach ist mit dem erfindungsgemäßen Verfahren und der Vorrichtung eine optimale Herstellung von "konischen Etiketten" für jeweilige konische Becher B möglich.

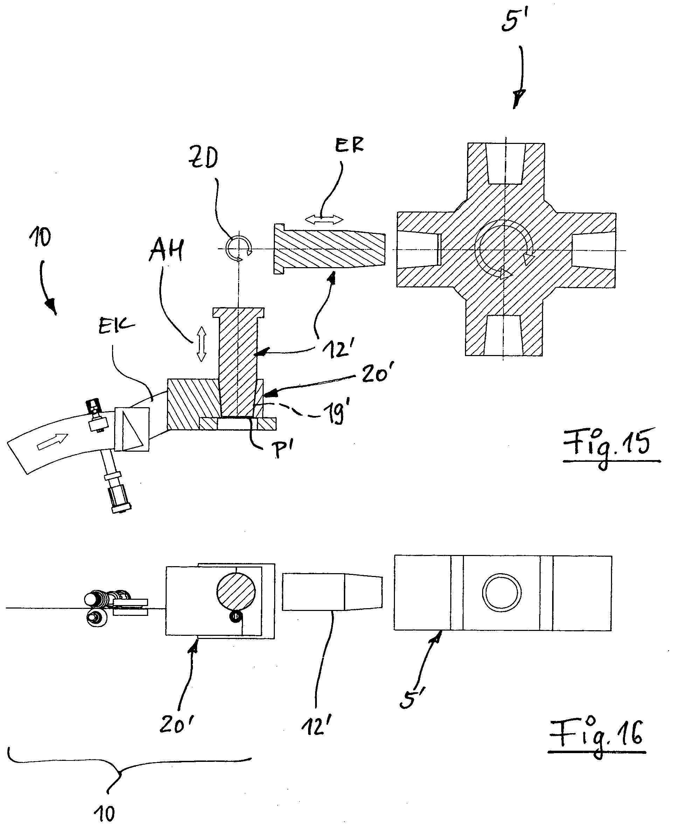

In Fig. 15 bis Fig. 18 ist die Anwendung des Zuführstempels 12' im Zusammenhang mit einem Revolverkopf 5' als übernehmendes Werkzeug dargestellt. Im Unterschied zu den Ausführungen gemäß Fig. 4 bis 13 wird das Etikett EK nach dem Verbinden mit dem Zuführstempel 12' nunmehr mit diesem nicht durch die Führungsplatte 20' hindurchgeschoben (Phase gemäß Fig. 10 und Fig. 11), sondern es erfolgt ein Aushub gemäß Pfeil AH, der Zuführstempel 12' wird positioniert (z. B:. Drehung ZD), und danach erfolgt der Einschub gemäß Pfeil ER in den Revolverkopf 5'.

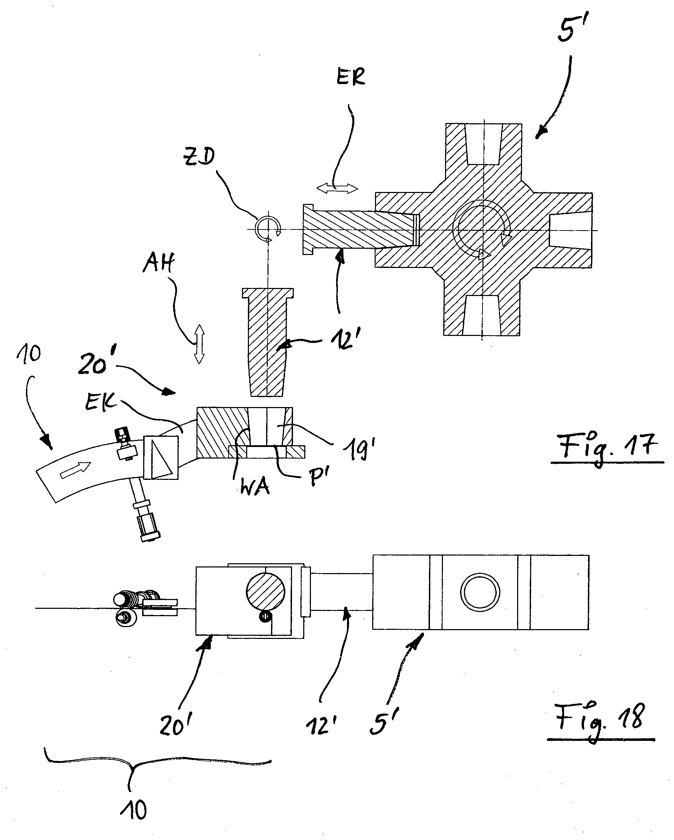

In der Funktionslage gemäß Fig. 15 und Fig. 16 wird deutlich, dass das Etikett EK in die - auch einteilig ausführbare - hier geschlossen dargestellte Führungsplatte 20' eingeschoben wird (ähnlich Fig. 9) und danach am Zuführstempel 12' anliegt. In einer weiteren Verfahrensvariante ist vorgesehen, dass das Etikett EK - bzw. die entsprechende Banderole - in die Aufnahmeöffnung 19' dann eingeschoben wird, wenn der Zuführstempel 12' eine Abstandsposition zur Führungsplatte 20' aufweist (Fig. 17). Es versteht sich, dass dabei eine "Wickelbewegung" der kreisringsektorförmigen Banderole EK an der Innenwandung WA erfolgt. Dabei wird der Effekt einer optimalen Führung entlang einer Führungsbahn P' so genutzt, dass das Etikett EK beim Absenken des Zuführstempels 12' (Pfeil AH) in optimaler Übernahmelage erfasst und an das Werkzeug 5' positionsgenau und faltenfrei übergeben wird.

## Patentansprüche

1. Verfahren zum Etikettieren eines konischen Kunststoffbehälters (B) und hierfür vorgesehene Banderole, die in Form eines Etikettes (E), Dekorbandes o. dgl. Informationsträgers von einem insbesondere getaktet vorschiebbaren Zuführstreifen (11) auf einen Zuführstempel (12) übergeben und von diesem aus mittels einer Vorschubbewegung (H) in ein jeweiliges Formnest (2) einer Tiefziehanordnung (6, 7, 8, 9) verlagert wird, derart, dass während einer anschließenden In-Mould-Bearbeitungsphase jeweils das einzelne Etikett (E) und der zu formende Kunststoffbehälter (B) in dem gemeinsamen Formnest (2) zusammengeführt werden, wobei an zumindest einem Zuführstreifen (11) jeweilige Teilabschnitte (T, T') mit einer bereichsweise kreisringsektorförmigen Kontur (KR) vorgeformt sowie dieser Zuführstreifen (11) getaktet an einen konischen Zuführstempel (12) übergeben werden, an den eine verbundene Reihe bildenden Teilabschnitten (T, T') zumindest ein Vereinzelungsschnitt durchgeführt sowie ein dabei abgetrennter Teilabschnitt (T) jeweils als einzelnes kreisringsektorförmiges Etikett (EK) in das Formnest (2) überführt wird und der jeweils als ein vorderes Ende des Zuführstreifens (11) mit diesem verbundene Teilabschnitt (T) zu dem zumindest bereichsweise eine konische Umfangskontur (K) aufweisenden Zuführstempel (12) hin in eine Übernahmeposition verlagert wird und wobei das vordere Ende des Zuführstreifens (11) oder das einzelne kreisringsektorförmig abgetrennte Etikett (EK) an dem konischen Umfangsteil (K) des Zuführstempels (12) tangential angelegt (Abstand L), danach in einer zur Anlageebene (M') am Zuführstempel (12) geneigten (Neigung N) Vorschubrichtung (15) verlagert und dabei entlang des konischen Umfangsteils (K) geführt wird.

2. Verfahren nach Anspruch 1, **dadurch gekennzeichnet, dass** das kreisringsektorförmige Etikett (EK) während der Zuführ- und Anlagephase am Zuführstempel (12) entlang einer Führungsbahn (P) verlagert wird.

3. Verfahren nach einem der vorhergehenden Ansprüche, **dadurch gekennzeichnet, dass** das vereinzelte Etikett (EK) in einer den Zuführstempel (12) zumindest bereichsweise umgreifenden Transportstellung fixiert und danach der Zuführstempel (12) mit dem Etikett (EK) in das Formnest (2) für den Kunststoffbehälter (B) überführt wird (Pfeil 16).

4. Verfahren nach einem der vorhergehenden Ansprüche, **dadurch gekennzeichnet, dass** das kreisringsektorförmige Etikett (EK) jeweils vor, während oder nach dessen Anlegephase am Zuführstempel (12) anderenends mittels zumindest des einen Vereinzelungsschnittes vom Zuführstreifen (11) getrennt wird.

5. Verfahren nach einem der vorhergehenden Ansprüche, **dadurch gekennzeichnet, dass** mehrere der Zuführstreifen (11) in Längsrichtung jeweils mehrere der bereits vorgeformten Teilabschnitte (T, T') in einer verbundenen Reihenanordnung aufweisen und diese getaktet nacheinander als jeweilige vereinzelte Etiketten (EK) von einem jeweiligen Zuführstempel (12) übernommen werden.

6. Verfahren nach einem der vorhergehenden Ansprüche, **dadurch gekennzeichnet, dass** an dem Zuführstreifen (12) in einer der Streifenbreite (Q) entsprechenden Übereinanderanordnung mehrere Reihenanordnungen mit jeweiligen Teilabschnitten (T, T') vorgeformt werden.

7. Verfahren nach einem der vorhergehenden Ansprüche, **dadurch gekennzeichnet, dass** der vorgeformte Teilabschnitt (T, T') zur Bildung des einzelnen Etiketts (E, EK) nur noch im Bereich einer im wesentlichen quer zur Streifenlängsrichtung verlaufenden Konturlinie (KR') getrennt und danach vom Zuführstreifen (11) abgezogen wird.

8. Verfahren nach einem der vorhergehenden Ansprüche, **dadurch gekennzeichnet, dass** während des Vereinzelungsschnitts am hinteren Ende des jeweils in Übergaberichtung vorderen Teilabschnitts (T) gleichzeitig eine vordere Kontur (K") des nachfolgenden Teilabschnitts (T') geformt wird.

9. Verfahren nach einem der vorhergehenden Ansprüche, **dadurch gekennzeichnet, dass** während des zumindest einen Vereinzelungsschnittes mehrere Schnittlinien (KR', KR") erzeugt werden.

10. Vorrichtung zum Etikettieren eines konischen Kunststoffbehälters, insbesondere zur Durchführung des Verfahrens gemäß Anspruch 1 bis 9, mit zumindest einem einen von einem Zuführstreifen (11) trennbaren Informationsträger, eine Banderole, ein Etikett (E, EK) o. dgl. übernehmenden Zuführstempel (12), von dem aus das Etikett (EK) mittels einer Vorschubbewegung (16) in ein jeweiliges Formnest (2) einer Tiefziehanordnung (6, 7, 8, 9) verlagerbar ist, derart, dass während einer anschließenden In-Mould-Bearbeitungsphase jeweils zumindest eines der Etiketten (EK) und das zu formende Behältnis (B) in dem gemeinsamen Formnest (2) zusammenführbar sind, **dadurch gekennzeichnet, dass** ein an zumindest einem Zuführstreifen (11) vorgesehenes und mit kreisringsektorförmiger Kontur (KR) formbares Etikett (EK) einem Zuführstempel (12) mit zumindest bereichsweise konischer Umfangskontur (K) zuführbar ist, wobei der mittels zumindest eines Schneidelementes (17) am Zuführstreifen (11) vorgeformte Teilabschnitt (T, T') oder ein vorderes Ende des bereits vereinzelten kreisringsektorförmigen Etiketts (E) zumindest phasenweise mit einer in Förderrichtung (15) eine zumindest bereichsweise lagegenaue Umschlingung des konischen Zuführstempels (12) steuernden Führungsanlage (P) zusammenwirken und der an den konischen Zuführstempel (12) in eine Anlagestellung verlagerte kreisringsektorförmig vorgeformte Teilabschnitt (T, T') zumindest phasenweise mit dem einen Vereinzelungsschnitt ausführenden Schneidelement (29) zusammenwirkt.

11. Vorrichtung nach Anspruch 10, **dadurch gekennzeichnet, dass** im Bereich des Zuführstempels (12) das vereinzelte Etikett (EK) entlang der Führungsanlage (P) bis in eine vorgebbare Übergabeposition am konischen Zuführstempel (12) verlagerbar, auf diesem festlegbar und gemeinsam mit diesem in das Formnest (2) überführbar ist.

12. Vorrichtung nach Anspruch 10 oder 11, **dadurch gekennzeichnet, dass** der bereichsweise konisch geformte Zuführstempel (12) in eine im Wesentlichen komplementäre Aufnahmeöffnung (19) einer Führungsplatte (20) schubbeweglich eingreift, der kreisringsektorförmige Teilabschnitt (T, T') bzw. das Etikett in diese Aufnahmeöffnung (19) einschiebbar ist und diese Führungsplatte (20) sowie der Zuführstempel (12) in Gegenüberlage zu einem Formnest (2) der Becherformung positionierbar sind.

13. Vorrichtung nach Anspruch 12, **dadurch gekennzeichnet, dass** die Führungsplatte (20) zweiteilig ausgebildet ist, derart, dass die in Beschickungslage den Zuführstempel (12) zumindest bereichsweise umgreifende Aufnahmeöffnung (19) durch Verlagerung eines Schlittenteils (21) erweiterbar und der Zuführstempel (12) ausfahrbar ist.

14. Vorrichtung nach einem der Ansprüche 10 bis 13, **dadurch gekennzeichnet, dass** die Aufnahmeöffnung (19) auf eine Querschnittsvergrößerung (S) einstellbar ist, derart, dass der das Etikett (EK) tragende Zuführstempel (12) auf einem Zuführweg (23) bis in ein zugeordnetes Formnest (2) verlagerbar ist.

15. Vorrichtung nach einem der Ansprüche 10 bis 14, **dadurch gekennzeichnet, dass** das verlagerbare Schlittenteil (21) einen in die Aufnahmeöffnung (19) tangential einmündenden Zuführschlitz (24) aufweist.

16. Vorrichtung nach Anspruch 15, **dadurch gekennzeichnet, dass** der Zuführschlitz (24) im Bereich des Schlitzbodens (25) als Führung für das Streifenteil (11) wirkt.

17. Vorrichtung nach Anspruch 15 oder 16, **dadurch gekennzeichnet, dass** der Zuführschlitz (24) mittels eines zumindest zweiteiligen Schlittenteiles gebildet ist.

18. Vorrichtung nach einem der Ansprüche 15 bis 17, **dadurch gekennzeichnet, dass** der Zuführschlitz (24) in seinen Längen-, Breiten- und/oder Höhenabmessungen veränderbar ist.

19. Vorrichtung nach einem der Ansprüche 10 bis 18, **dadurch gekennzeichnet, dass** im Bereich der Aufnahmeöffnung (19) eine das vordere Ende des vorgeformten Teilabschnitts (T) erfassende Einzugsbaugruppe (26) vorgesehen ist.

20. Vorrichtung nach Anspruch 19, **dadurch gekennzeichnet, dass** im Bereich des in die Aufnahmeöffnung (19) einmündenden Zuführschlitzes (24) die zumindest ein Einzugrad (27) aufweisende Einzugsbaugruppe (26) vorgesehen ist.

21. Vorrichtung nach Anspruch 20, **dadurch gekennzeichnet, dass** das Einzugrad im Bereich des konischen Zuführstempels (12) mit einem Einzug-Gegenrad (28) zusammenwirkt.

22. Vorrichtung nach einem der Ansprüche 10 bis 21, **dadurch gekennzeichnet, dass** der aus Zuführstempel (12) und Führungsplatte (20) gebildeten Einheit eine die Reihenanordnung der vorgeformten Teilabschnitte (T) erfassende Anstellbaugruppe (29) und eine Schneidbaugruppe (30) zugeordnet sind.

23. Vorrichtung nach Anspruch 22, **dadurch gekennzeichnet, dass** die Anstellbaugruppe (29) eine Antriebsrolle (31) und eine Gegenrolle (32) aufweist und von diesen die Zuführbanderole (11) erfassbar ist.

24. Vorrichtung nach Anspruch 22 oder 23, **dadurch gekennzeichnet, dass** die Schneidbaugruppe (30) zwei Schneidplatten (33, 34) aufweist, auf denen eine Dreieckskontur bildende Schneidmesser (36, 37, 38) vorgesehen sind.

## Claims

1. Method for labelling a conical plastics container (B), and banderole provided for this purpose which, in the form of a label (E), decorative sleeve or similar information carrier, is transferred from a feed strip (11), which can in particular be advanced intermittently, onto a feed die (12) and is displaced therefrom by means of an advancement movement (H) into a particular mould cavity (2) of a deep-drawing assembly (6, 7, 8, 9), such that, during a subsequent in-mould processing phase, the single label (E) and the plastics container (B) to be moulded are respectively brought together in the common mould cavity (2), wherein, on at least one feed strip (11), respective subportions (T, T') are preformed so as to have a contour (KR) in the shape of an annulus sector in regions, and said feed strip (11) is transferred intermittently onto a conical feed die (12), at least one isolating cut is carried out on the subportions (T, T') forming a connected series, and a subportion (T) separated thereby is conveyed into the mould cavity (2) in each case as a single annulus sector-shaped label (EK), and the subportion (T) that is connected in each case to the feed strip (11) as a front end thereof is displaced towards the feed die (12) comprising a conical peripheral contour (K) at least in regions into a receiving position and wherein the front end of the feed strip (11) or the single annulus sector-shaped, separated label (EK) is tangentially applied (distance L) to the conical peripheral part (K) of the feed die (12), is then displaced in an advancement direction (15) inclined (inclination N) to an application plane (M') on the feed die (12) and is thereby guided along the conical peripheral part (K).

2. Method according to claim 1, **characterised in that** the annulus sector-shaped label (EK) is displaced along a guide track (P) during the feeding and application phase on the feed die (12).

3. Method according to either of the preceding claims, **characterised in that** the isolated label (EK) is fixed in a transport position encompassing the feed die (12) at least in regions and then the feed die (12) is conveyed (arrow 16) together with the label (EK) into the mould cavity (2) for the plastics container (B).

4. Method according to any of the preceding claims, **characterised in that** the annulus sector-shaped label (EK) is separated from the feed strip (11) before, during or after the application phase thereof on the feed die (12) at the other end by means of at least the one isolating cut.

5. Method according to any of the preceding claims, **characterised in that** a plurality of the feed strips (11) each comprise, in the longitudinal direction, a plurality of the already preformed subportions (T, T') in a connected series arrangement, and said subportions are received intermittently in succession as respective isolated labels (EK) by a particular feed die (12).

6. Method according to any of the preceding claims, **characterised in that**, on the feed strip (12), a plurality of series arrangements having respective subportions (T, T') are preformed in an arrangement one on top of the other which corresponds to the strip width (Q).

7. Method according to any of the preceding claims, **characterised in that** the preformed subportion (T, T') is separated only in the region of a contour line (KR') extending substantially transversely to the strip longitudinal direction and is then withdrawn from the feed strip (11) in order to form the single label (E, EK).

8. Method according to any of the preceding claims, **characterised in that**, during the isolating cut at the rear end of the subportion (T) at the front in the transfer direction in each case, a front contour (K") of the subsequent subportion (T') is formed simultaneously.

9. Method according to any of the preceding claims, **characterised in that**, during the at least one isolating cut, a plurality of cutting lines (KR', KR") are produced.

10. Device for labelling a conical plastics container, in particular for carrying out the method according to claims 1 to 9, comprising at least one feed die (12) which receives an information carrier, a banderole, a label (E, EK) or the like which can be separated from a feed strip (11), and from which feed die the label (EK) can be displaced into a particular mould cavity (2) of a deep-drawing assembly (6, 7, 8, 9) by means of an advancement movement (16), such that, during a subsequent in-mould processing phase, in each case at least one of the labels (EK) and the container (B) to be moulded can be respectively brought together in the common mould cavity (2), **characterised in that** a label (EK) which is provided on at least one feed strip (11) and can be formed so as to have an annulus sector-shaped contour (KR) can be fed to a feed die (12) having a peripheral contour (K) which is conical at least in regions, the subportion (T, T') preformed on the feed strip (11) by means of at least one cutting element (17) or a front end of the already isolated annulus sector-shaped label (E) cooperating at least in phases with a guide system (P) which controls, in the conveying direction (15), looping of the conical feed die (12) that is positionally precise at least in regions, and the subportion (T, T') preformed in an annulus sector shape and displaced into an application position onto the conical feed die (12) cooperating at least in phases with the cutting element (29) carrying out an isolating cut.

11. Device according to claim 10, **characterised in that**, in the region of the feed die (12), the isolated label (EK) can be displaced along the guide system (P) as far as into a predetermined transfer position on the conical feed die (12), can be fixed on said feed die, and can be transferred together with said feed die into the mould cavity (2).

12. Device according to either claim 10 or claim 11, **characterised in that** the feed die (12) which is conically formed in regions translationally engages in a substantially complementary receiving opening (19) of a guide plate (20), the annulus sector-shaped subportion (T, T') or the label can be inserted into said receiving opening (19) and said guide plate (20) and the feed die (12) can be positioned opposite to a mould cavity (2) of the cup moulding.

13. Device according to claim 12, **characterised in that** the guide plate (20) is designed in two parts, such that the receiving opening (19) which encompasses the feed die (12) at least in regions when in the feed position can be expanded by displacing a slide element (21) and the feed die (12) can be extended.

14. Device according to any of claims 10 to 13, **characterised in that** the receiving opening (19) can be adjusted to a cross-sectional enlargement (S), such that the feed die (12) carrying the label (EK) can be displaced on a feed path (23) as far as into an associated mould cavity (2).

15. Device according to any of claims 10 to 14, **characterised in that** the displaceable slide element (21) comprises a feed slot (24) which tangentially opens into the receiving opening (19).

16. Device according to claim 15, **characterised in that** the feed slot (24) acts as a guide for the strip part (11) in the region of the slot bottom (25).

17. Device according to either claim 15 or claim 16, **characterised in that** the feed slot (24) is formed by means of an at least two-part slide element.

18. Device according to any of claims 15 to 17, **characterised in that** the feed slot (24) can be varied in its length, width and/or height dimensions.

19. Device according to any of claims 10 to 18, **characterised in that** an infeed assembly (26) which detects the front end of the preformed subportion (T) is provided in the region of the receiving opening (19).

20. Device according to claim 19, **characterised in that** the infeed assembly (26) comprising at least one infeed wheel (27) is provided in the region of the feed slot (24) which opens into the receiving opening (19).

21. Device according to claim 20, **characterised in that** the infeed wheel cooperates with a counter infeed wheel (28) in the region of the conical feed die (12).

22. Device according to any of claims 10 to 21, **characterised in that** an adjustment assembly (29) detecting the series arrangement of the preformed subportions (T) and a cutting assembly (30) are associated with the unit formed from the feed die (12) and the guide plate (20).

23. Device according to claim 22, **characterised in that** the adjustment assembly (29) comprises a drive roller (31) and a counter roller (32), and the feed banderole (11) can be detected by said components.

24. Device according to either claim 22 or claim 23, **characterised in that** the cutting assembly (30) comprises two cutting plates (33, 34) on which cutting blades (36, 37, 38) that form a triangular contour are provided.

## Revendications

1. Procédé d'étiquetage d'un récipient en matière plastique (B) conique et d'une banderole prévue pour celui-ci qui est transmise sous la forme d'une étiquette (E), bande décorative ou support d'informations similaire par un ruban d'alimentation (11) coulissant en particulier en cadence à un poinçon d'alimentation (12) et est déplacée de celui-ci au moyen d'un mouvement d'avance (H) dans une cavité de moule (2) respective d'un agencement d'emboutissage (6, 7, 8, 9) de telle manière que pendant une phase d'usinage dans le moule consécutive respectivement l'étiquette individuelle (E) et le récipient en matière plastique (B) à former sont réunis dans la cavité de moule (2) commune, dans lequel au niveau d'au moins un ruban d'alimentation (11) des sections partielles respectives (T, T') avec un contour (KR) en forme de secteur d'anneau de cercle par endroits sont préformées ainsi que ce ruban d'alimentation (11) sont transmis en cadence à un poinçon d'alimentation (12) conique, au niveau des sections partielles (T, T') formant une rangée reliée au moins une coupe de séparation est réalisée ainsi qu'une section partielle (T) séparée respectivement comme étiquette (EK) en forme de secteur d'anneau de cercle individuelle est transférée dans la cavité de moule (2) et la section partielle (T) reliée respectivement comme une extrémité avant du ruban d'alimentation (11) à celui-ci est déplacée vers le poinçon d'alimentation (12) présentant au moins par endroits un contour périphérique (K) conique dans une position de remise et dans lequel l'extrémité avant du ruban d'alimentation (11) ou l'étiquette (EK) séparée en forme de secteur d'anneau de cercle individuelle est placée de manière tangentielle au niveau de la partie périphérique (K) conique du poinçon d'alimentation (12) (distance L), puis est déplacée dans un sens d'avance (15) incliné (inclinaison N) par rapport au plan d'appui (M') contre le poinçon d'alimentation (12) et est guidée le long de la partie périphérique (K) conique.

2. Procédé selon la revendication 1, **caractérisé en ce que** l'étiquette (EK) en forme de secteur d'anneau de cercle est déplacée pendant la phase d'alimentation et d'appui au niveau du poinçon d'alimentation (12) le long d'une bande de guidage (P).

3. Procédé selon l'une des revendications précédentes, **caractérisé en ce que** l'étiquette (EK) séparée est fixée dans une position de transport entourant au moins par endroits le poinçon d'alimentation (12) et ensuite le poinçon d'alimentation (12) est transféré avec l'étiquette (EK) dans la cavité de moule (2) pour le récipient en matière plastique (B) (flèche 16).

4. Procédé selon l'une des revendications précédentes, **caractérisé en ce que** l'étiquette (EK) en forme de secteur d'anneau de cercle est séparée respectivement avant, pendant ou après sa phase d'appui au niveau du poinçon d'alimentation (12) à l'autre extrémité au moyen d'au moins l'une coupe de séparation du ruban d'alimentation (11).

5. Procédé selon l'une des revendications précédentes, **caractérisé en ce que** plusieurs des rubans d'alimentation (11) présentent dans le sens longitudinal respectivement plusieurs des sections partielles (T, T') déjà préformées dans un agencement en rangée relié et celles-ci sont reprises en cadence les unes après les autres comme des étiquettes (EK) séparées respectives par un poinçon d'alimentation (12) respectif.

6. Procédé selon l'une des revendications précédentes, **caractérisé en ce qu'**au niveau du ruban d'alimentation (12) dans un agencement l'un sur l'autre correspondant à la largeur de ruban (Q) plusieurs agencements en rangée sont préformés avec des sections partielles (T, T') respectives.

7. Procédé selon l'une des revendications précédentes, **caractérisé en ce que** la section partielle (T, T') préformée n'est encore séparée pour la formation de l'étiquette (E, EK) individuelle que dans la zone d'une ligne de contour (KR') s'étendant sensiblement transversalement au sens longitudinal de ruban et est ensuite retirée du ruban d'alimentation (11).

8. Procédé selon l'une des revendications précédentes, **caractérisé en ce qu'**un contour avant (K") de la section partielle (T') suivante est simultanément formé pendant la coupe de séparation à l'extrémité arrière de la section partielle (T) avant respectivement dans le sens de remise.

9. Procédé selon l'une des revendications précédentes, **caractérisé en ce que** pendant l'au moins une coupe de séparation plusieurs lignes de coupe (KR', KR") sont générées.

10. Dispositif d'étiquetage d'un récipient en matière plastique conique, en particulier pour la réalisation du procédé selon la revendication 1 à 9, avec au moins un support d'informations séparable d'un ruban d'alimentation (11), une banderole, une étiquette (E, EK) ou un poinçon d'alimentation (12) de remise similaire, duquel l'étiquette (EK) peut être déplacée au moyen d'un mouvement d'avance (16) dans une cavité de moule (2) respective d'un agencement d'emboutissage (6, 7, 8, 9) de telle manière que pendant une phase d'usinage dans le moule consécutive respectivement au moins une des étiquettes (EK) et le récipient (B) à former peuvent être réunis dans la cavité de moule (2) commune, **caractérisé en ce qu'**une étiquette (EK) prévue au niveau d'au moins un ruban d'alimentation (11) et formable avec un contour (KR) en forme de secteur d'anneau de cercle peut être amenée à un poinçon d'alimentation (12) avec un contour périphérique (K) au moins par endroits conique, dans lequel la section partielle (T, T') préformée au moyen d'au moins un élément de coupe (17) au niveau du ruban d'alimentation (11) ou une extrémité avant de l'étiquette (E) en forme de secteur d'anneau de cercle déjà séparée coopèrent au moins par phase avec une installation de guidage (P) commandant dans le sens de transport (15) un enroulement précis en position au moins par endroits du poinçon d'alimentation (12) conique et la section partielle (T, T') préformée en forme de secteur d'anneau de cercle déplacée au niveau du poinçon d'alimentation (12) conique dans une position d'appui coagit au moins par phase avec l'élément de coupe (29) réalisant une coupe de séparation.

11. Dispositif selon la revendication 10, **caractérisé en ce que** dans la zone du poinçon d'alimentation (12) l'étiquette (EK) isolée peut être déplacée le long de l'installation de guidage (P) jusqu'à une position de reprise prescriptible au niveau du poinçon d'alimentation conique (12), fixée sur celui-ci et transférée conjointement avec celui-ci dans la cavité de moule (2).

12. Dispositif selon la revendication 10 ou 11, **caractérisé en ce que** le poinçon d'alimentation (12) formé par endroits de manière conique se met en prise dans une ouverture de réception (19) sensiblement complémentaire d'une plaque de guidage (20) de manière mobile en poussée, la section partielle (T, T') en forme de secteur d'anneau de cercle ou l'étiquette peut être insérée dans cette ouverture de réception (19) et cette plaque de guidage (20) ainsi que le poinçon d'alimentation (12) sont positionnables en face d'une cavité de moule (2) de la formation de gobelet.

13. Dispositif selon la revendication 12, **caractérisé en ce que** la plaque de guidage (20) est réalisée en deux parties de telle manière que l'ouverture de réception (19) entourant au moins par endroits en position de chargement le poinçon d'alimentation (12) puisse être élargie par déplacement d'une partie de glissoir (21) et le poinçon d'alimentation (12) puisse être déployé.

14. Dispositif selon l'une des revendications 10 à 13, **caractérisé en ce que** l'ouverture de réception (19) est réglable à un agrandissement de section transversale (S) de telle manière que le poinçon d'alimentation (12) portant l'étiquette (EK) puisse être déplacé sur une voie d'alimentation (23) jusque dans une cavité de moule (2) associée.

15. Dispositif selon l'une des revendications 10 à 14, **caractérisé en ce que** la partie de glissoir (21) déplaçable présente une fente d'alimentation (24) débouchant de manière tangentielle dans l'ouverture de réception (19).

16. Dispositif selon la revendication 15, **caractérisé en ce que** la fente d'alimentation (24) agit dans la zone du fond de fente (25) comme guidage pour la partie de ruban (11).

17. Dispositif selon la revendication 15 ou 16, **caractérisé en ce que** la fente d'alimentation (24) est formée au moyen d'une partie de glissoir au moins en deux parties.

18. Dispositif selon l'une des revendications 15 à 17, **caractérisé en ce que** la fente d'alimentation (24) est modifiable dans ses dimensions de longueur, largeur et/ou hauteur.

19. Dispositif selon l'une des revendications 10 à 18, **caractérisé en ce qu'**un ensemble d'alimentation (26) prenant l'extrémité avant de la section partielle (T) préformée est prévu dans la zone de l'ouverture de réception (19).

20. Dispositif selon la revendication 19, **caractérisé en ce que** l'ensemble d'alimentation (26) présentant au moins une roue d'alimentation (27) est prévu dans la zone de la fente d'alimentation (24) débouchant dans l'ouverture de réception (19).

21. Dispositif selon la revendication 20, **caractérisé en ce que** la roue d'alimentation coagit dans la zone du poinçon d'alimentation (12) conique avec une roue antagoniste d'alimentation (28).

22. Dispositif selon l'une des revendications 10 à 21, **caractérisé en ce qu'**à l'unité formée du poinçon d'alimentation (12) et de la plaque de guidage (20) sont associés un ensemble de serrage (29) prenant l'agencement en rangée des sections partielles (T) préformées et un ensemble de coupe (30).

23. Dispositif selon la revendication 22, **caractérisé en ce que** l'ensemble de serrage (29) présente un rouleau d'entraînement (31) et un rouleau antagoniste (32) et la banderole d'alimentation (11) peut être prise par ceux-ci.

24. Dispositif selon la revendication 22 ou 23, **caractérisé en ce que** l'ensemble de coupe (30) présente deux plaques de coupe (33, 34) sur lesquelles des lames de coupe (36, 37, 38) formant un contour triangulaire sont prévues.
